# EUROPÄISCHE PATENTSCHRIFT

(11) **EP 3 415 773 B1**
(45) Veröffentlichungstag und Bekanntmachung des Hinweises auf die Patenterteilung: **05.02.2020**
(21) Anmeldenummer: 17176163.8
(22) Anmeldetag: 15.06.2017
(51) Int. Cl.: F16B 25/00

(54) **SCHRAUBE MIT EINEM MEHRGÄNGIGEN UNTERKOPFGEWINDE UND BEFESTIGUNGSANORDNUNG HIERZU**
SCREW WITH A MULTI-SPEED JACK THREAD AND FASTENING ARRANGEMENT FOR SAME
VIS COMPRENANT UN FILETAGE SOUS TÊTE À FILETS MULTIPLES ET SYSTÈME DE FIXATION ASSOCIÉ

(43) Veröffentlichungstag der Anmeldung: 19.12.2018
(73) Patentinhaber: SFS Intec Holding AG, 9435 Heerbrugg (CH)
(72) Erfinder: KELLER, René, 9444 Diepoldsau (CH); HÖRLER, Yves, 9443 Widnau (CH); KOCH, Stefan, 9436 Oberriet (CH)

(56) Entgegenhaltungen:
- EP-A1- 0 779 400
- WO-A1-98/40580
- US-A1- 2009 245 973
- US-A1- 2012 207 564

## Beschreibung

Die Erfindung betrifft eine Schraube mit einem Kopf mit einem Angriff für ein Werkzeug, einem Schaft und einer Spitze, wobei ein mehrgängiges Unterkopfgewinde unterhalb des Kopfes anschliessend an einen gewindefreien Abschnitt angeordnet ist. Schrauben dieser Art werden dazu verwendet um Profile von Gebäudehüllen-Elementen an einer Unterkonstruktion zu befestigen.

Weiterhin betrifft die Erfindung eine Befestigungsanordnung mit einer solchen Schraube und die Verwendung einer solchen Schraube zur Befestigung von Gebäudehüllen-Elementen.

Als Gebäudehüllen-Elemente sind zu verstehen Elemente zur Verkleidung von Dächern und Wänden, wie zum Beispiel Paneele bzw. Sandwichpaneele, Trapezbleche, Hochprofil- bzw. Wellenprofilelemente. Sandwichpaneele bestehen dabei üblicherweise aus einem Verbund von Isolationsmaterial mit einem dünnen Metallblech und wird im Folgenden auch als Schichtpaket bezeichnet. Die Unterkonstruktion wird üblicherweise aus Holz und/oder Metall(profilen) bestehen, kann aber auch Mauerwerk oder Beton umfassen.

### HINTERGRUND

Charakteristisch für Gebäudehüllenelemente ist, dass sie profiliert sind und somit nicht überall auf einer ebenen Unterkonstruktion aufliegen (können). Zudem müssen sie, insbesondere bei Verwendung von Trapezblechen in Dachkonstruktionen, an den profil-erhabenen Stellen befestigt werden, um ein Eindringen von Regenwasser zu vermeiden. Das macht den Einschraubvorgang mit einem klassischen Befestiger schwierig, weil die Gefahr besteht, dass durch zu starkes Eindrehen das Profil verbogen oder beschädigt wird bzw. bei nicht ausreichend starker Befestigung das Profil anfällig wird für Windlasten.

Dieses Problem wird im Stand der Technik bekanntermassen derart gelöst, dass ein separates Unterkopfgewinde vorgesehen wird. Kurz bevor der Einschraubvorgang in der Unterkonstruktion beendet ist, wird das Unterkopfgewinde in das Profilblech eingreifen und dieses gezielt an den Schraubenkopf anpressen. Somit ist das Profil-Deckblech direkt am Befestiger gehalten und eine Belastung auf das Deckblech kann direkt in den Befestiger eingeleitet werden. Würde kein Unterkopfgewinde existieren, könnte das Deckblech bei Belastung in Richtung Unterkonstruktion niedergedrückt werden (abhängig von der Festigkeit der Isolationsschichten), was wiederum die Dichtheit der Dachkonstruktion beeinträchtigt.

Oftmals wird ein Unterkopfgewinde in Kombination mit einem gewindefreien Schaftabschnitt verwendet, welcher zwischen dem Gewindeabschnitt und der Kopfunterseite angeordnet ist. Dadurch wird gegen Ende des Einschraubvorgangs das Profilblech in Richtung Schraubenkopf gezogen und gelangt in den gewindefreien Abschnitt. Dort kann die Schraube im Profilblech frei drehen und somit die Verschraubung justiert werden; die Lage des Blechs relativ zum Kopf bleibt gleich. Gleichzeitig wird eine Rückdrehsicherheit erzielt. Im gewindefreien Abschnitt kann zudem eine Unterlagscheibe vorgesehen werden bzw. Dichtelemente oder eine Kombination aus beidem.

Auch wenn diese Kombination von gewindefreiem Abschnitt, Unterkopfgewinde und Unterlagscheibe / Dichtelementen bewährt ist, weist sie dennoch das Problem auf, dass das Profilblech als oberstes und am meisten den Umgebungskräften ausgesetztes Element von den Schrauben gemäss Stand der Technik im verbauten Zustand nur vom Gewindeauslauf getragen wird.

### STAND DER TECHNIK

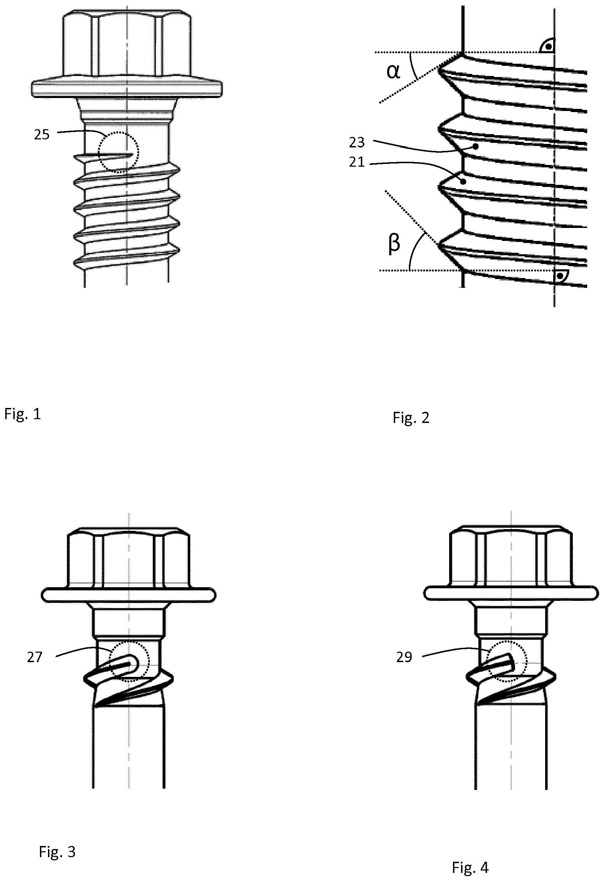

Dieses Problem wird von der DE 10 2014 000 940 A1 der Anmelderin wie folgt angegangen: Die dort beschriebene Schraube (Fig. 1) weist als Besonderheit auf, dass der kopfseitige Gewindeauslauf so gestaltet ist, dass die zum Kopf weisende Gewindeflanke einen konstanten Abstand zur Kopfunterseite nicht unterschreitet und damit eine Endebene definiert. Diese Gewindeflanke bildet dadurch eine grössere Stützfläche als ein abgehackter oder flach auslaufender Gewindeauslauf. Dennoch ist selbst diese verbesserte Stützfläche nur einseitig angeordnet, der Anpressdruck des Profilblechs an die Kopfunterseite erfolgt zwar flächig, aber nicht symmetrisch am Umfang.

Eine weitere Schraube ist aus der US 2012/0207564 A bekannt.

Die vorliegende Erfindung hat es sich zum Ziel gesetzt, eine Schraube des oben geschilderten Standes der Technik zu verbessern, insbesondere die Sicherheit der Handhabung und die Erhöhung der Haltekräfte im verbauten Zustand zu erhöhen.

### BESCHREIBUNG DER ERFINDUNG

Diese Aufgabe wird durch eine Schraube, eine Befestigungsanordnung und eine Verwendung einer solchen Schraube gemäss den unabhängigen Ansprüchen gelöst. Die Unteransprüche beschreiben jeweils vorteilhafte Ausgestaltungen.

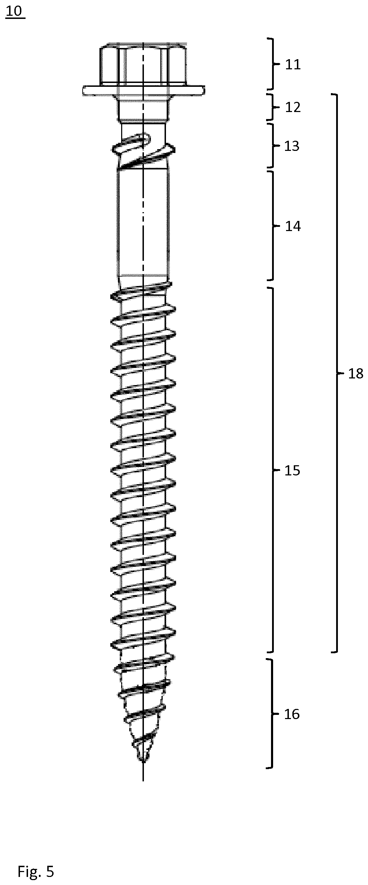

Eine erfindungsgemässe Schraube 10 umfasst somit einen Kopf 11 mit einem Angriff für ein Werkzeug, einen Schaft 18 mit mindestens einem ersten und einem zweiten Gewindeabschnitt 13, 15 und einer Spitze 16. Der erste Gewindeabschnitt 13 ist ein Unterkopfgewinde, das an einen gewindefreien Unterkopfabschnitt 12 anschliesst (vgl. Fig. 5). Dieses Unterkopfgewinde 13 ist als mindestens doppelgängiges Gewinde ausgelegt, wobei die Steigung des ersten Gewindeabschnittes 13 grösser ist als die Steigung des zweiten Gewindeabschnittes 15 und die axiale Wegdifferenz über die gesamte Gewindelänge des ersten Gewindeabschnitts höchstens 3.5mm beträgt.

Wie im Stand der Technik üblich, wird die Steigung als der in axialer Richtung gemessene Abstand zweier benachbarter Gewindespitzen desselben Gewindezuges betrachtet, was auch als zurückgelegte Einschraubtiefe pro vollständiger 360° Umdrehung anschaulich beobachtet werden kann. Erfindungsgemäss ist gefordert, dass (aufgrund der unterschiedlichen Steigungen) auf die gesamte Gewindelänge des ersten Gewindeabschnitts 13 bezogen, die erzielbare Wegdifferenz des ersten Gewindeabschnitts 13 relativ zum zweiten Gewindeabschnitt 15 höchstens 3.5mm betragen darf. Technisch anschaulich heisst das, dass der erste Gewindeabschnitt 13 über seine gesamte Windungslänge betrachtet ein im Eingriff befindliches Bauteil um höchstens 3.5mm axial weiter bewegen wird als ein Bauteil, das sich aktuell im Eingriff mit dem zweiten Gewindeabschnitt 15 befindet. Während sich eine Schraube mittels des zweiten Gewindeabschnittes in die Unterkonstruktion um eine Distanz x einsenkt; wird ein Deckblech, das sich im Eingriff mit dem ersten Gewindeabschnitt befindet,in derselben Zeit höchstens x+3.5mm weiter bewegt während bzw. wenn der erste, kurze Gewindeabschnitt 13 vollständig durchlaufen wird. Bei der Montage wird die Schraube also kurz vor Erreichen der Endposition das Deckblech stärker in Richtung Schraubenkopf bewegen als sich die Schraube in die Unterkonstruktion einsenkt. Dadurch kann gewährleistet werden, dass das Deckblech nicht so leicht in Richtung Unterkonstruktion verbogen wird, wie das im Stand der Technik möglich ist. Es wird somit eine grössere Handhabungssicherheit geschaffen.

Es ist vorteilhaft zwischen dem ersten und dem zweiten Gewindeabschnitt 13, 15 einen gewindefreier Schaftabschnitt 14 vorzusehen. Die Einschraubtiefe des Befestigers wird auf das Schichtpaket aus Deckblech und Isolationsschichten abgestimmt. Am fertigungstechnisch einfachsten lässt sich das durch einen gewindefreien Schaftabschnitt variabler Länge realisieren. Der zweite Gewindeabschnitt 15 reicht dabei bevorzugt vom Schaft 18 (also dem axialen, im wesentlichen zylindrischen Teil der Schraube) bis in die Spitze 16. Mit "bis in die Spitze" ist dabei der sich verjüngende Teil der Spitze gemeint und nicht ausschliesslich ein Gewindezug bis an die äusserste Spitze der Schraube. Die Spitze kann durchaus als Bohrspitze oder Verdrängungsspitze ausgeführt sein und dennoch einen Gewindeabschnitt aufweisen, der sich bis in die Spitze erstreckt.

In einer bevorzugten Ausführungsform wählt man die Steigung des ersten Gewindeabschnittes 13 mindestens 1.7 mal und höchstens 4 mal grösser als die Steigung des zweiten Gewindeabschnittes 15 ist. In einer weiteren Präzisierung wird man für Schrauben-Nenndurchmesser zwischen 4mm und 8mm die Steigung des ersten Gewindeabschnittes 13 zwischen 1mm und 3mm wählen. Die anderen Werte ergeben sich durch Rückrechnung anhand der oben gemachten Angaben.

Wegen des mehrgängigen (mindestens zweigängigen) Gewindes im Gewindeabschnitt 13 plus der gefordert höheren Steigung im Vergleich zu Gewindeabschnitt 15, kann die Zahl der ausgeführten Gewindegänge, ausgedrückt als das Vielfache von Windungszahlen, durchaus gering ausfallen. In einer bevorzugten Ausführungsform weist das Unterkopfgewinde bzw. der erste Gewindeabschnitt 13 lediglich 0.5 bis 1.5 Windungslängen auf, bevorzugt sogar nur 0.5 bis 0.8fache Windungslängen.

Die Ausführung der kopfseitigen Ausläufe des Unterkopfgewindes bzw. des ersten Gewindeabschnitts 13 können abgehackt ausgeführt werden. Mit abgehackt ist dabei ein abruptes Ende des Gewindeganges gemeint ohne dass eine gewollte Modifikation des Flankenquerschnitts oder der Flankenhöhe erfolgt (siehe Fig. 4, Detail 29). Auch eine abgerundete Ausführung wie in Fig. 3 als Detail 27 gezeigt, ist denkbar. In einer weiteren Ausführungsform können die zur Kopfunterseite weisenden Gewindeflanken der Ausläufe des Unterkopfgewindes bzw. des ersten Gewindeabschnitts 13 so ausgelegt werden, dass sie einen konstanten Abstand zur Kopfunterseite nicht unterschreiten und damit eine Endebene definieren. Diese Ausführung zeigt Detail 25 von Figur 1 anschaulich. Dadurch entstehen mindestens zwei symmetrisch um den Umfang verteilte Auflagepunkte oder -flächen für das zu montierende bzw. montierte Deckblech.

In einer weiteren Ausführungsform weist eine erfindungsgemässe Schraube ein asymmetrisch ausgeführtes Gewinde beim ersten Gewindeabschnitt 13 auf. Ein asymmetrisches Gewinde zeigt (vgl. Figur 2) unterschiedliche Winkel α, β der Gewindeflanken 21, 23 auf. Die Winkel sind in diesem Fall als die Winkel zwischen der Tangente an der Gewindeflanke und dem Lot auf die Gewinde-Zentralachse definiert, bezogen auf einen Schnittpunkt dieser Geraden am Fusspunkt der Gewindeflanke am Gewindegrund.

Bevorzugt ist hierbei beim ersten Gewindeabschnitt 13 die kopfseitige (=axial dem Kopf zugewandt) Gewindeflanke 21 steiler (=spitzwinkliger) ausgeführt ist als die spitzenseitige (=axial der Spitze zugewandte) Flanke 23.

Die Spitze 16 einer erfindungsgemässen Schraube 10 kann als Bohrspitze, als selbstfurchende, gewindeschneidende oder Verdrängungsspitze aufgeführt sein und ganz oder teilweise ein ein- oder mehrgängiges Gewinde aufweisen. Die Auslegung wird sich nach dem Einsatzzweck richten und dem Material, in dem die Schraube Halt finden soll.

Der Schraubenkopf 11 selbst kann wie im Stand der Technik bekannt ausgeführt sein, seine individuelle Ausgestaltung (Sechskant-, Zylinder-, Senk, Rund, Linsenkopf o.ä.) spielt für die Erfindung eine untergeordnete Rolle. Der Kraftangriff kann bedarfsgerecht ausgelegt werden (TORX, Schlitz, Aussen-/Innensechskant,...) und für manuelle wie maschinelle Betätigung optimiert werden. Bevorzugt wird der Kopf eine plane Unterseite (zum Schaft hin gerichtet) aufweisen bzw. eine als tellerförmige, radial vom Schaft wegweisende Verbreiterung, die die Auflage auf dem zu verschraubenden Material verbessert.

Als Material für erfindungsgemässe Schrauben können Kohlenstoffstähle, bei Bedarf gehärtet, Edelstähle oder Bimet-Konstruktionen zum Einsatz kommen.

Eine in eine Unterkonstruktion eingetriebene, erfindungsgemässen Schraube als Befestigung eines Profilblechs lässt sich als Befestigungsanordnung beschreiben, wobei das Profilblech plus evtl. Isolationsschicht(en) als Schichtpaket bezeichnet werden.

So eine Befestigungsanordnung zur Befestigung an einer Unterkonstruktion umfasst demnach ein Schichtpaket mit mindestens einer dünnen, festen Platte als äusserem Element sowie einer Schraube wie oben beschrieben. Die Dicke des Schichtpakets wird dabei bevorzugt im Wesentlichen der Länge des gewindefreien Schaftabschnitts 14 zwischen erstem 13 und zweitem Gewindeabschnitt 15 plus der axialen Länge des ersten Unterkopfabschnittes 13 plus der Länge des gewindefreien Unterkopfabschnittes (12) entsprechen. Diese Auslegungsregel optimiert die Schraube auf den Anwendungsfall.

Bei der Auslegung der Länge des gewindefreien Unterkopfabschnittes 12 gilt es im Wesentlichen 2 Anwendungsfälle zu betrachten. Zum einen, wo die Schraube mit zusätzlich einer Unterlagscheibe und/oder Dichtungselemente(n) (Dichtscheiben, Isolationen) verbaut werden soll. Im einfachen Fall OHNE Zusatzelemente wird bei dieser Befestigungsanordnung die axiale Länge des gewindefreien Unterkopfabschnittes 12 im Wesentlichen der Dicke der Platte des Schichtpaketes entspricht. Im komplexeren Fall mit Zusatzelementen wird die axiale Länge des gewindefreien Unterkopfabschnittes 12 im Wesentlichen der Dicke der Platte des Schichtpaketes plus optionalen Unterlag- und Dichtungselementen entsprechen. Durch diese Auslegung(en) kann gewährleistet werden, dass beim Eindrehen das äussere Profilblech in den gewindefreien Unterkopfabschnitt 12 gelangt, dort von den mindestens 2 Ausläufen des Unterkopfgewindes gestützt und via die evtl. vorgesehenen Unterlagscheiben / Dichtungselemente gegen den Kopf 11 gepresst wird. Gleichzeitig wird eine Rückdrehsicherheit erzielt.

Verwendung findet eine erfindungsgemässe Schraube bei der Montage bzw. Befestigung von Gebäudehüllen-Elementen wie Plattenelementen, Paneelen, Sandwichpaneelen, Trapezprofilen mit und ohne Isolationselemente auf einer Unterkonstruktion aus Metall, Holz, Mauerwerk und/oder Beton.

### BESCHREIBUNG DER FIGUREN

Die Erfindung wird nun mit Bezug auf die begleitenden Zeichnungen beispielhaft erläutert.
Figur 5 zeigt eine Schraube 10 mit einem Kopf 11 und einem Schaft 18, der die Schraubenlängsachse definiert. Ein (zweiter) Gewindeabschnitt 15 verläuft von der Spitze 16 bis in den Schaft. Unterhalb des Kopfes 11 der Schraube 10, betrachtet vom Kopf 11 in Richtung Spitze 16 folgen ein gewindefreien Unterkopfabschnitt 12 definierter Länge und ein erster Gewindeabschnitt 13, ein Unterkopfgewinde. Dieses ist erfindungsgemäss mindestens zweigängig ausgeführt. Danach schliesst sich ein gewindefreier Schaftabschnitt 14 an, wiederum gefolgt vom bereits angesprochenen zweiten Gewindeabschnitt 15.
Figur 2 zeigt ein Detail einer bevorzugten Ausführungsform des Unterkopfgewindes 13, eine asymmetrische Ausführung mit unterschiedlichen Winkeln α, β. Erfindungsgemäss gilt α < β, sprich die kopfseitige Gewindeflanke 21 ist steiler ausgeführt ist als die spitzenseitige Flanke 23.
Die Figuren 1, 3 und 4 zeigen unterschiedliche Ausführungen von kopfseitigen Ausläufen des Unterkopfgewindes. Anstatt mit allmählich abnehmender Höhe des Gewindezuges ein Auslaufen zu realisieren, zeigt Figur 4 ein abgehacktes Gewindeende 29, ein abruptes Ende, bei dem die Gewindehöhe praktisch unmittelbar auf Null zurückgeht. Figur 3 zeigt eine abgerundete Variante 27, die für bestimmte Einsatzfälle Vorteile haben kann.

Detail 25 in Figur 1 zeigt, wie die zur Kopfunterseite weisenden Gewindeflanken der Ausläufe des Unterkopfgewindes bzw. des ersten Gewindeabschnitts (13) einen konstanten Abstand zur Kopfunterseite nicht unterschreiten und damit eine Endebene definieren. Durch diese Ausführung wird eine Auflagefläche statt einer punktförmigen Auflage erreicht

Die in der vorstehenden Beschreibung, in den Zeichnungen sowie in den Ansprüchen offenbarten Merkmale der Erfindung können sowohl einzeln als auch in beliebiger, jedoch technisch sinnvoller bzw. vorteilhafter Kombination für die Verwirklichung der Erfindung wesentlich sein. Eine nicht-explizite Darstellung einer Kombination von Merkmalen bedeutet nicht, dass eine solche Kombination nicht sinnvoll oder nicht möglich ist. Umgekehrt bedeutet eine gemeinsame Darstellung von Merkmalen nicht, dass zwischen den Merkmalen in jedem Fall ein struktureller und/oder funktioneller Zusammenhang besteht.

### BEZUGSZEICHENLISTE

- 10: Schraube
- 11: Kopf
- 12: gewindefreien Unterkopfabschnitt
- 13: erster Gewindeabschnitt, Unterkopfgewinde
- 14: gewindefreier Schaftabschnitt
- 15: zweiter Gewindeabschnitt
- 16: Spitze
- 18: Schaft

- 21: kopfseitige Gewindeflanke
- 23: spitzenseitige (Gewinde-)Flanke

- 25: kopfseitiger Auslauf des ersten Gewindeabschnitts 13, mit konstantem Abstand zur Kopfunterseite, eine Endebene definierend
- 27: kopfseitiger Auslauf des ersten Gewindeabschnitts 13, abgerundet
- 29: kopfseitiger Auslauf des ersten Gewindeabschnitts 13, abgehackt

## Patentansprüche

1. Schraube (10), mit
- einem Kopf (11) mit einem Angriff für ein Werkzeug,
- einem Schaft (18) mit mindestens einem ersten (13) und einem zweiten (15) Gewindeabschnitt,
- einer Spitze (16),
- wobei der erste Gewindeabschnitt (13) ein Unterkopfgewinde ist, das an einen gewindefreien Unterkopfabschnitt (12) anschliesst
- und dieses Unterkopfgewinde (13) als mindestens doppelgängiges Gewinde ausgelegt ist,
**dadurch gekennzeichnet, dass**
- die Steigung des ersten Gewindeabschnittes (13) grösser ist als die Steigung des zweiten Gewindeabschnittes (15) und
- die axiale Wegdifferenz über die gesamte Gewindelänge des ersten Gewindeabschnitts höchstens 3.5mm beträgt

2. Schraube nach Anspruch 1, **dadurch gekennzeichnet, dass** zwischen dem ersten (13) und zweiten Gewindeabschnitt (15) ein gewindefreier Schaftabschnitt (14) angeordnet ist.

3. Schraube nach Anspruch 1-2, **dadurch gekennzeichnet, dass** der zweite Gewindeabschnitt (15) sich vom Schaft (18) bis in die Spitze (16) erstreckt.

4. Schraube nach Anspruch 1-3, **dadurch gekennzeichnet, dass** die Steigung des ersten Gewindeabschnittes (13) mindestens 1.7 mal und höchstens 4 mal grösser als die Steigung des zweiten Gewindeabschnittes (15) ist.

5. Schraube nach Anspruch 1-4, **dadurch gekennzeichnet, dass** die Steigung des ersten Gewindeabschnittes (13) zwischen 1mm und 3mm beträgt bei einem Nenndurchmesser der Schraubenzwischen 4mm und 9mm.

6. Schraube nach Anspruch 1-5, **dadurch gekennzeichnet, dass** das Unterkopfgewinde bzw. der erste Gewindeabschnitt (13) lediglich mit einer 0.5 bis 1.5fachen Windungslänge ausgeführt ist, bevorzugt mit einer 0.5 bis 0.8fachen Windungslänge.

7. Schraube nach Anspruch 1-6, **dadurch gekennzeichnet, dass** die kopfseitigen Ausläufe des Unterkopfgewindes bzw. des ersten Gewindeabschnitts (13) abgehackt ausgeführt werden.

8. Schraube nach Anspruch 1-6, **dadurch gekennzeichnet, dass** die zur Kopfunterseite weisenden Gewindeflanken der Ausläufe des Unterkopfgewindes bzw. des ersten Gewindeabschnitts (13) einen konstanten Abstand zur Kopfunterseite nicht unterschreiten und damit eine Endebene definieren.

9. Schraube nach Anspruch 1-8, **dadurch gekennzeichnet, dass** das Gewinde des ersten Gewindeabschnittes (13) asymmetrisch ausgeführt ist.

10. Schraube nach Anspruch 9, **dadurch gekennzeichnet, dass** beim ersten Gewindeabschnitt (13) die kopfseitige Gewindeflanke (21) steiler ausgeführt ist als die spitzenseitige Flanke (23).

11. Eine Befestigungsanordnung, umfassend ein Schichtpaket mit mindestens einer dünnen, festen Platte als äusserem Element sowie einer Schraube gemäss Ansprüchen 1-10 zur Befestigung an einer Unterkonstruktion, **dadurch gekennzeichnet, dass** die Dicke des Schichtpakets bevorzugt im Wesentlichen der Länge des gewindefreien Schaftabschnitts (14) zwischen erstem (13) und zweitem Gewindeabschnitt (15) plus der axialen Länge des ersten Unterkopfabschnittes (13) plus der Länge des gewindefreien Unterkopfabschnittes (12) entspricht.

12. Befestigungsanordnung nach Anspruch 11, **dadurch gekennzeichnet, dass** die axiale Länge des gewindefreien Unterkopfabschnittes (12) im Wesentlichen der Dicke der dünnen Platte des Schichtpaketes entspricht.

13. Befestigungsanordnung nach Anspruch 11, **dadurch gekennzeichnet, dass** die axiale Länge des gewindefreien Unterkopfabschnittes (12) im Wesentlichen der Dicke der Platte des Schichtpaketes plus optionalen Unterlag- und Dichtungselementen entspricht.

14. Verwendung einer Schraube gemäss Anspruch 1-10 zur Befestigung von Gebäudehüllen-Elementen wie Plattenelementen, Paneelen, Sandwichpaneelen, Trapezprofilen auf einer Unterkonstruktion aus Metall, Holz, Mauerwerk und/oder Beton.

## Claims

1. A screw (10), comprising
- a head (11) having an engagement portion for a tool,
- a shank (18) having at least a first (13) and a second (15) threaded portion,
- a tip (16),
- the first threaded portion (13) being an underhead thread connected to a threadless underhead portion (12),
- and this underhead thread (13) being designed as an at least double-start thread,
**characterized in that**
- the pitch of the first threaded portion (13) is greater than the pitch of the second threaded portion (15), and
- the axial displacement difference over the entire thread length of the first threaded portion is not more than 3.5 mm.

2. The screw according to claim 1, **characterized in that** a threadless shank portion (14) is arranged between the first (13) and second threaded portions (15).

3. The screw according to claims 1 - 2, **characterized in that** the second threaded portion (15) extends from the shank (18) into the tip (16).

4. The screw according to claims 1 - 3, **characterized in that** the pitch of the first threaded portion (13) is at least 1.7 times and at most 4 times greater than the pitch of the second threaded portion (15).

5. The screw according to claims 1 - 4, **characterized in that** the pitch of the first threaded portion (13) is between 1 mm and 3 mm with a nominal diameter of the screws between 4 mm and 9 mm.

6. The screw according to claims 1 - 5, **characterized in that** the underhead thread or, respectively, the first thread portion (13) is designed with only 0.5 to 1.5 times the winding length, preferably with 0.5 to 0.8 times the winding length.

7. The screw according to claims 1 - 6, **characterized in that** the run-outs of the underhead thread or, respectively, the first threaded portion (13) at the head are designed to be chopped off.

8. The screw according to claims 1 - 6, **characterized in that** the thread flanks of the run-outs of the underhead thread or, respectively, the first threaded portion (13) facing towards the head underside do not fall below a constant distance from the head underside and thus define an end plane.

9. The screw according to claims 1 - 8, **characterized in that** the thread of the first threaded portion (13) is designed to be asymmetrical.

10. The screw according to claim 9, **characterized in that** in the first threaded portion (13), the thread flank (21) at the head is designed to be steeper than the flank (23) at the tip.

11. A fastening arrangement, comprising a layer packet with at least one thin, fixed plate as the outer element and a screw according to claims 1 - 10 for fastening to a substructure, **characterized in that** the thickness of the layer packet preferably corresponds substantially to the length of the threadless shank portion (14) between the first (13) and second threaded portions (15) plus the axial length of the first underhead portion (13) plus the length of the threadless underhead portion (12).

12. The fastening arrangement according to claim 11, **characterized in that** the axial length of the threadless underhead portion (12) substantially corresponds to the thickness of the thin plate of the layer packet.

13. The fastening arrangement according to claim 11, **characterized in that** the axial length of the threadless underhead portion (12) substantially corresponds to the thickness of the plate of the layer packet plus optional washer and sealing elements.

14. Use of a screw according to claims 1 - 10 for fastening building envelope elements such as panel elements, panels, sandwich panels, trapezoidal profiles to a substructure of metal, wood, masonry and/or concrete.

## Revendications

1. Vis (10) avec
- une tête (11) avec une prise pour un outil,
- une tige (18) avec au moins une première (13) et une deuxième (15) section filetée,
- une pointe (16),
- sachant que la première section filetée (13) est un filetage sous tête, qui se raccorde à une section sous tête sans filetage (12),
- et ce filetage sous tête (13) est conçu comme au moins un filetage à deux filets,
**caractérisée en ce que**
- le pas de la première section filetée (13) est plus grand que le pas de la deuxième section filetée (15) et
- la différence de parcours axiale sur toute la longueur de filetage de la première section de filetage est au maximum de 3,5 mm.

2. Vis selon la revendication 1, **caractérisée en ce qu'**entre la première (13) et la deuxième section filetée (15) est disposée une section de tige sans filetage (14).

3. Vis selon la revendication 1 - 2, **caractérisée en ce que** la deuxième section filetée (15) s'étend de la tige (18) jusque dans la tête (16).

4. Vis selon la revendication 1 - 3, **caractérisée en ce que** le pas de la première section filetée (13) est au moins 1,7 fois et au maximum 4 fois plus grand que le pas de la deuxième section filetée (15) .

5. Vis selon la revendication 1 - 4, **caractérisée en ce que** le pas de la première section filetée (13) se situe entre 1 mm et 3 mm pour un diamètre nominal de la vis entre 4 mm et 9 mm.

6. Vis selon la revendication 1 - 5, **caractérisée en ce que** le filetage sous tête ou la première section filetée (13) n'est exécuté qu'avec une longueur de spire de 0,5 à 1,5 fois, de préférence avec une longueur de spire de 0,5 à 0,8 fois.

7. Vis selon la revendication 1 - 6, **caractérisée en ce que** les fins de filet côté tête du filetage sous tête ou de la première section filetée (13) sont exécutés éboutés.

8. Vis selon la revendication 1 - 6, **caractérisée en ce que** les flancs de filet tournés vers la face inférieure de tête des fins de filets du filetage sous tête ou de la première section filetée (13) ne dépassent pas une distance constante par rapport à la face inférieur de tête et définissent de ce fait un plan d'extrémité.

9. Vis selon la revendication 1 - 8, **caractérisée en ce que** le filetage de la première section filetée (13) est exécuté asymétrique.

10. Vis selon la revendication 9, **caractérisée en ce que** pour la première section filetée (13), le flanc de filet (21) côté tête est exécuté plus raide que le flanc (23) côté pointe.

11. Système de fixation comprenant un ensemble de couches avec au moins une plaque mince, fixe comme élément extérieur ainsi qu'une vis selon les revendications 1 - 10 pour fixer à une infrastructure, **caractérisé en ce que** l'épaisseur de l'ensemble de couches correspond de préférence pour l'essentiel à la longueur de la section de tige (14) sans filetage entre la première (13) et la deuxième (15) section filetée plus la longueur axiale de la première section sous tête (13) plus la longueur de la section sous tête (12) sans filetage.

12. Système de fixation selon la revendication 11, **caractérisé en ce que** la longueur axiale de la section sous tête (12) sans filetage correspond pour l'essentiel à l'épaisseur de la plaque mince de l'ensemble de couches.

13. Système de fixation selon la revendication 11, **caractérisé en ce que** la longueur axiale de la section sous tête (12) sans filetage correspond pour l'essentiel à l'épaisseur de la plaque de l'ensemble de couches plus des éléments d'appui et d'étanchéité en option.

14. Utilisation d'une vis selon la revendication 1 - 10 pour la fixation d'éléments d'enveloppe de bâtiment comme des éléments en plaques, des panneaux, des panneaux sandwich, des profilés trapézoïdaux sur une infrastructure en métal, bois, maçonnerie et/ou béton.
